# EUROPÄISCHE PATENTSCHRIFT

(11) **EP 2 527 699 B1**
(45) Veröffentlichungstag und Bekanntmachung des Hinweises auf die Patenterteilung: **05.08.2015**
(21) Anmeldenummer: 12167835.3
(22) Anmeldetag: 14.05.2012
(51) Int. Cl.: F16K 15/08, F16K 15/12, F16K 17/04

(54) **Rückschlagventil für Sprühdüse und Düsenrohr**
Check valve for spray nozzle and nozzle tube
Clapet anti-retour pour pulvérisateur et rampe de pulvérisation

(30) Priorität: 25.05.2011 DE 102011076443
(43) Veröffentlichungstag der Anmeldung: 28.11.2012
(73) Patentinhaber: Lechler GmbH, 72555 Metzingen (DE)
(72) Erfinder: Frick, Jürgen, 71384 Weinstadt (DE); Schmidt, Boris, 73730 Esslingen (DE); Fecht, Albert, 72585 Riederich (DE)
(74) Vertreter: Patentanwälte Ruff, Wilhelm, Beier, Dauster & Partner

(56) Entgegenhaltungen:
- EP-A1- 2 127 755
- DE-A1- 10 343 825
- DE-A1- 19 825 574
- DE-U1- 29 815 321
- GB-A- 344 636
- US-A- 5 673 858

## Beschreibung

Die Erfindung betrifft ein Rückschlagventil für eine Sprühdüse mit einem Ventilgehäuse, einem Absperrkörper und einem Ventilsitz, wobei der Absperrkörper wenigstens in einer Längsrichtung des Ventilgehäuses beweglich angeordnet ist,wobei der Absperrkörper mittels eines parallel zur Längsrichtung angeordneten Wellrohres mit dem Ventilgehäuse verbunden ist und wobei der Absperrkörper mittels einer Federwirkung des Wellrohres in Richtung auf den Ventilsitz vorgespannt ist. Die Erfindung betrifft auch ein Düsenrohr mit Filter zum Einstecken in eine Zuführleitung.

Aus dem Produktprogramm der Anmelderin Lechler GmbH ist ein sogenanntes Water Stop Valve für Entzunderungsdüsen bekannt, siehe Prospekt WSV "Water Stop Valve for Scalemaster Nozzles", Lechler GmbH, 1/07. Die dort gezeigten Wasserstoppventile oder Rückschlagventile weisen ein rohrförmiges Ventilgehäuse auf, in dem ein kegelförmiger Absperrkörper in Längsrichtung des rohrförmigen Ventilgehäuses beweglich angeordnet ist. Der Ventilkörper wird mittels einer Druckfeder in Richtung auf einen Ventilsitz vorgespannt. Das rohrförmige Ventilgehäuse ist Bestandteil eines Düsenrohres und der Ventilsitz ist an einem Filterbauteil vorgesehen. Das Filterbauteil bildet dann eine Verlängerung des rohrförmigen Ventilgehäuses, das wiederum am gegenüberliegenden Ende mit einer Sprühdüse versehen ist. Das gesamte Düsenrohr einschließlich Sprühdüse wird dann teilweise in eine Zuführleitung bzw. in einen Anschweißnippel eines Spritzbalkens eingeschoben, so dass das Filterbauteil innerhalb des Spritzbalkens angeordnet ist und über die Sprühdüse Sprühflüssigkeit aus der Zuführleitung in die Umgebung gelangen kann. Solche bekannten Rückschlagventile und Düsenrohre werden bei der Entzunderung von heißen Metalloberflächen, insbesondere in Walzwerken, eingesetzt und sollen verhindern, dass nach Absenken des Fluiddruckes noch wesentliche Fluidmengen aus der Sprühdüse austreten.

Aus der britischen Patentschrift GB 344,636 ist ein sogenanntes Tropfstoppventil bekannt, das das Nachtropfen von Öl aus einer Düse verhindert. Das Rückschlagventil bildet an seinem stromabwärts gelegenen Ende eine Sprühdüse aus und weist ein Ventilgehäuse, einen Absperrkörper und einen Ventilsitz auf, wobei der Absperrkörper wenigstens in einer Längsrichtung des Ventilgehäuses beweglich angeordnet ist. Der Ventilsitz ist mittels eines kreiszylindrischen, frei vorragenden Endes eines Zapfens gebildet, auf den wiederum eine Hülse aufgeschoben ist, die sich am stromabwärts gelegenen Ende düsenartig verjüngt. Wenn das düsenartig verjüngte Ende auf dem freien kreiszylindrischen Ende des Zapfens aufsitzt, ist das Ventil geschlossen. Der hülsenartige Absperrkörper ist mittels eines parallel zur Längsrichtung angeordneten Wellrohres mit dem Ventilgehäuse verbunden. Eine Federwirkung des Wellrohres spannt den Absperrkörper in Richtung auf den Ventilsitz vor. Zusätzlich kann eine Schraubenfeder vorgesehen sein, um den Absperrkörper in Richtung auf den Ventilsitz vorzuspannen. Um die nach dem Schließen des Ventils nachtropfenden Ölmengen weitestmöglich zu reduzieren bzw. um ein Nachtropfen überhaupt zu verhindern, ragt das freie Ende des Zapfens, das den Ventilsitz bildet, bis fast an das düsenartig ausgebildete Ende der den Absperrkörper bildenden Hülse.

Aus dem deutschen Gebrauchsmuster DE 298 15 321 U1 ist ein steuerbares 2/2-Wege-Einbauventil bekannt, das einen konusförmigen Absperrkörper aufweist, der zum Schließen des Ventils gegen einen ringförmigen Ventilsitz gedrückt werden kann Der Absperrkörper ist mit einem Wellrohr verbunden, wobei das Innere des Wellrohres und somit die Rückseite des Absperrkörpers mittels eines separaten Steuerdrucks beaufschlagt werden kann. Das Wellrohr sorgt für eine hermetische Abdichtung der Steuerkammer im Inneren des Wellrohres gegen das Fluid, das das Einbauventil durchströmt.

Aus der europäischen Offenlegungsschrift EP 2 127 755 A1 ist ein Düsenrohr für Entzunderungsdüsen bekannt. In dem Düsenrohr ist ein in Längsrichtung des Ventilgehäuses beweglicher Absperrkörper vorgesehen. Der Absperrkörper wird gegen die Strömungsrichtung mittels einer Schraubenfeder gegen einen Ventilsitz am Düsenrohr vorgespannt. Stromabwärts des Absperrkörpers ist ein Strahlrichter vorgesehen.

Mit der Erfindung sollen ein verbessertes Rückschlagventil und ein verbessertes Düsenrohr bereitgestellt werden.

Erfindungsgemäß ist hierzu ein Rückschlagventil für eine Sprühdüse mit einem Ventilgehäuse, einem Absperrkörper und einem Ventilsitz vorgesehen, wobei der Absperrkörper wenigstens in einer Längsrichtung des Ventilgehäuses beweglich angeordnet ist, bei dem der Absperrkörper mittels eines parallel zur Längsrichtung angeordneten Wellrohres mit dem Ventilgehäuse verbunden ist, wobei der Absperrkörper mittels einer Federwirkung des Wellrohres in Richtung auf den Ventilsitz vorgespannt ist, und bei dem der Absperrkörper in Durchflussrichtung gesehen an einem stromaufwärts gelegenen Ende des Wellrohres angeordnet ist. Auf diese Weise kann stromabwärts des Absperrkörpers eine lange Beruhigungsstrecke für die Strömung angeordnet werden, die zu einer Verringerung von Turbulenzen und damit einem geringen Strömungswiderstand beiträgt. Gerade bei sehr hohen Fluiddrücken, wie sie für Entzunderungsdüsen verwendet werden, kann dadurch auch mit der stromabwärts des Absperrkörpers und stromabwärts des Wellrohres angeordneten Sprühdüse ein besseres Sprühbild erzielt werden.

Mittels eines Wellrohres kann der Absperrkörper in Längsrichtung des beispielsweise rohrförmigen Ventilgehäuses beweglich mit diesem verbunden werden. Eine separate Druckfeder kann eingespart werden und das erfindungsgemäße Rückschlagventil kann vereinfacht werden.

In Weiterbildung der Erfindung ist das Wellrohr sowohl auf seiner radial innen liegenden Innenseite als auch auf seiner radial außen liegenden Außenseite wenigstens im geöffneten Zustand des Rückschlagventils mit unter Druck stehendem, zu versprühendem Fluid beaufschlagt.

Auf diese Weise kann auch bei extrem hohen Drücken des zu versprühenden Fluids von mehreren 100 bar sichergestellt werden, dass das Wellrohr nicht seitlich ausgelenkt wird, wodurch eine durch das Wellrohr auf den Absperrkörper ausgeübte Vorspannkraft verändert werden könnte. Vielmehr heben sich der radial innen und radial außen auf das Wellrohr wirkende Druck gegenseitig auf, so dass das Wellrohr in und entgegen der Absperrrichtung frei beweglich bleibt. Um diese beidseitige Druckbeaufschlagung zu realisieren, kann zwischen dem Absperrkörper und einer Innenseite des Düsenrohres ein erster Strömungskanal ausgebildet sein, der die radial außen liegende Seite des Wellrohres mit unter Druck stehendem Fluid beaufschlagt. Am stromabwärts gelegenen Ende des Leitrohres kann ein Strömungskanal zwischen der Innenseite des Düsenrohres und dem Leitrohr ausgebildet sein, um die radial innen liegende Seite des Wellrohres mit unter Druck stehendem Fluid zu beaufschlagen. Alternativ bildet das Wellrohr mit seiner radial innen liegenden Seite einen Teil des Strömungskanals.

In Weiterbildung der Erfindung ist innerhalb des Wellrohres ein Leitrohr vorgesehen, wobei das Leitrohr Teil eines Fluidkanals durch das Rückschlagventil bildet.

Durch Vorsehen eines Leitrohres innerhalb des Wellrohres, wobei das Leitrohr vorteilhafterweise kreiszylinderförmig mit glatten Wänden ausgebildet ist, kann sichergestellt werden, dass lediglich ein geringer Strömungsverlust im Rückschlagventil auftritt, da das Leitrohr und nicht das Wellrohr Teil des Strömungskanals bilden und dadurch Turbulenzen verringert werden. Trotz Vorsehen des Leitrohres kann ein großer freier Querschnitt für durchströmendes Fluid realisiert werden. Das Leitrohr weist vorteilhafterweise einen konstanten Durchmesser auf.

In Weiterbildung der Erfindung ist das Leitrohr an einem Ende fest mit dem Absperrkörper verbunden und am anderen Ende relativ zum Ventilgehäuse verschiebbar gelagert.

Auf diese Weise kann zwischen den beweglichen Absperrkörper und dem gegenüberliegenden, beweglichen Ende des Leitrohres ein durchgehender Fluidkanal mit glatter Wand realisiert werden. Je nach Wanddicke des Leitrohres liegt zwischen dem beweglichen Ende des Leitrohres und dem Düsengehäuse nur ein Absatz in Höhe der Wandstärke des Leitrohres vor. Gegenüber dem Vorsehen einer Schraubenfeder bietet ein Wellrohr den Vorteil, weniger Platz als eine Schraubenfeder mit gleicher Vorspannkraft zu benötigen. Der freie Strömungsquerschnitt innerhalb des Leitrohres kann dadurch größer ausgeführt werden und ein geringerer Strömungsverlust wird realisiert.

In Weiterbildung der Erfindung ist der Absperrkörper ringförmig und der Ventilsitz wenigstens abschnittsweise kegelstumpfförmig ausgebildet, wobei der Absperrkörper in einer Schließstellung auf einer Kegelmantelfläche des Ventilsitzes anliegt.

Mittels eines ringförmigen Absperrkörpers und eines kegelstumpfförmigen Ventilsitzes lässt sich eine gute Dichtwirkung bei geringem Anpressdruck erzielen. Vor allem ist aber auch eine strömungsgünstige Gestaltung des Ventilsitzes möglich. Der ringförmige Absperrkörper kann an den Innendurchmesser des Wellrohres angepasst werden, so dass am Übergang zwischen ringförmigem Absperrkörper und Wellkörper keine Verringerung des freien Strömungsquerschnitts auftritt.

In Weiterbildung der Erfindung ist der Ventilsitz an einer Ventilsitzscheibe vorgesehen, die in einen Fluidkkanal des Rückschlagventils eingesetzt und mit wenigstens einem Durchlasskanal versehen ist.

Durch diese Maßnahmen wird die Herstellbarkeit des erfindungsgemäßen Rückschlagventils erleichtert, da die Ventilsitzscheibe in einfacher Weise in ein rohrförmiges Ventilgehäuse eingesetzt werden kann.

In Weiterbildung der Erfindung ist der wenigstens eine Durchlasskanal mittels einer Durchgangsbohrung und/oder einer Nut in der Ventilsitzscheibe ausgebildet. Vorteilhafterweise ist der wenigstens eine Durchlasskanal als bogenförmiges Langloch in der Ventilsitzscheibe ausgebildet.

Solche bogenförmigen Langlöcher können den Ventilsitz konzentrisch umgebend angeordnet sein und stellen einen geringen Strömungswiderstand gegenüber einer kreisrunden Bohrung bereit, da ein größerer freier Strömungsquerschnitt realisierbar ist und die Strömung weniger stark umgelenkt werden muss.

In Weiterbildung der Erfindung ist der Ventilsitz Teil eines Stromlinienkörpers.

Auf diese Weise kann ein geringerer Strömungswiderstand erzielt werden und auch ein Sprühbild einer mit der durch das Rückschlagventil geleiteten Flüssigkeit beaufschlagten Düse kann wesentlich verbessert werden. Gerade bei den hohen Fluiddrücken, mit denen Entzunderungsdüsen beaufschlagt werden, ist dies von erheblichem Vorteil.

In Weiterbildung der Erfindung ist der Absperrkörper ringförmig ausgebildet und der Stromlinienkörper erstreckt sich durch den Absperrkörper hindurch.

Durch diese Maßnahme kann bei geöffnetem Rückschlagventil das Fluid durch den ringförmigen Absperrkörper hindurch und in das Leitrohr geführt werden. Gerade am kritischen Übergang zwischen Absperrkörper und dem danach folgenden Stromlinienkörper bzw. dem Leitrohr kann die Strömung dadurch merklich beruhigt werden.

In Weiterbildung der Erfindung verjüngt sich, in Strömungsrichtung gesehen, der Stromlinienkörper im Bereich des Ventilsitzes und erweitert sich stromabwärts des Ventilsitzes wieder.

Überraschenderweise kann die Strömung in dem Strömungskanal stromabwärts des Absperrkörpers bzw. Ventilsitzes merklich beruhigt werden, wenn der Stromlinienkörper sich anschließend an die Verjüngung, die im Bereich des Ventilsitzes angeordnet ist, wieder erweitert. Durch eine solche Erweiterung nach der Verjüngung des Ventilsitzes wird die Strömung gegen die Innenwand des Strömungskanals bzw. des Leitrohres gedrückt, wodurch überraschenderweise ein geringer Strömungswiderstand und eine Beruhigung der Strömung erzielt werden.

In Weiterbildung der Erfindung verjüngt sich, in Strömungsrichtung gesehen, anschließend an die Erweiterung, die stromabwärts des Ventilsitzes angeordnet ist, der Stromlinienkörper wieder bis zu einer Endspitze.

Das allmähliche Auslaufen des Stromlinienkörpers sorgt für einen geringen Strömungswiderstand und eine Beruhigung der Strömung. Der Stromlinienkörper verjüngt sich dadurch im Bereich des Ventilsitzes, erweitert sich anschließend an diese Verjüngung wieder und läuft dann allmählich bis zu einer Endspitze aus. Stromaufwärts des Ventilsitzes weist der Stromlinienkörper vorteilhafterweise eine gegen die Strömung gerichtete Spitze auf, von der ausgehend sich der Stromlinienkörper dann kegelförmig erweitern kann. Der Stromlinienkörper ist vorteilhafterweise mittels einzelner Stege mit einem Gehäuse des Rückschlagventils verbunden, wobei diese Stege beispielsweise Teil einer Ventilsitzscheibe bilden. Im Bereich der Ventilsitzscheibe kann der Stromlinienkörper dann parallel zur Mittellängsachse des Rückschlagventils verlaufen. Insgesamt weist der Stromlinienkörper damit eine, in Strömungsrichtung gesehen, sich von einer Spitze zunächst erst kegelförmig erweiternde Form auf. Anschließend verlaufen Außenwände des Stromlinienkörpers im Bereich der Ventilsitzscheibe und deren Durchgangskanälen im Wesentlichen parallel zu einer Mittellängsachse. Anschließend an diesen parallel zur Mittellängsachse verlaufenden Bereich verjüngt sich der Stromlinienkörper, um in diesem Bereich den Ventilsitz auszubilden. Der Ventilsitz ist durch einen sich verjüngenden Bereich gebildet. Nach Durchlaufen eines lokal geringsten Durchmessers erweitert sich der Stromlinienkörper wieder. Dieser Übergang von der Verjüngung zu der erneuten Erweiterung ist vorteilhafterweise ausgerundet ausgebildet. Anschließend an die Erweiterung folgt dann wieder eine erneute Verjüngung des Stromlinienkörpers bis zu einer Endspitze. Auch dieser Übergang von der Erweiterung zu der erneuten Verjüngung ist vorteilhafterweise gerundet ausgebildet. Die Endspitze kann dann allmählich auslaufen und insgesamt etwa die Hälfte der Länge des gesamten Stromlinienkörpers einnehmen.

Das der Erfindung zugrundeliegende Problem wird auch durch ein Düsenrohr mit Filter zum Einstecken in eine Zuführleitung gelöst, das mit einem erfindungsgemäßen Rückschlagventil versehen ist.

Bei einem solchen Düsenrohr kann innerhalb des Wellrohres ein Leitrohr vorgesehen sein und der Ventilsitz kann Teil eines Stromlinienkörpers sein, wobei in Weiterbildung der Erfindung ein Strahlrichter stromabwärts des Stromlinienkörpers in dem Leitrohr angeordnet ist.

Durch Vorsehen eines Strahlrichters können innerhalb des Leitrohres möglicherweise noch nicht vollständig abgeklungene Turbulenzen weiter vermindert werden und es kann gerade bei den hohen Fluiddrücken, die bei Entzunderungsdüsen verwendet werden, ein gutes und zeitlich konstantes Sprühbild mit einer am Düsenrohr angeordneten Sprühdüse erzielt werden.

In Weiterbildung der Erfindung weist der Strahlrichter mehrere Strömungsleitflächen auf, die sich in radialer Richtung auf eine Mittellängsachse des Strahlrichters zu erstrecken, wobei ein die Mittellängsachse unmittelbar umgebender Bereich frei von Einbauten ist.

Mittels eines solchen Strahlrichters lässt sich eine gute Richtwirkung der Strömung bei geringem Strömungswiderstand erreichen.

In Weiterbildung der Erfindung ist stromabwärts des Strahlrichters ein Fluidkanal mit konstantem Querschnitt angeordnet.

Ein solcher Fluidkanal mit konstantem Querschnitt stromabwärts des Strahlrichters und stromaufwärts einer Sprühdüse hat sich in Bezug auf einen geringen Strömungswiderstand und ein gutes Sprühbild als vorteilhaft erwiesen.

Weitere Merkmale und Vorteile der Erfindung ergeben sich aus den Ansprüchen und der nachfolgenden Beschreibung bevorzugter Ausführungsformen der Erfindung im Zusammenhang mit den Zeichnungen. Einzelmerkmale der unterschiedlichen Ausführungsformen lassen sich dabei in beliebiger Weise miteinander kombinieren, ohne den Rahmen der Erfindung zu überschreiten. In den Zeichnungen zeigen:
- Fig. 1: eine Seitenansicht eines erfindungsgemäßen Düsenrohres gemäß einer bevorzugten Ausführungsform der Erfindung mit daran angeordneter Sprühdüse,
- Fig. 2: eine Ansicht auf die Schnittebene A-A der Fig. 2,
- Fig. 3: eine isometrische Darstellung des gemäß Fig. 2 geschnittenen Düsenrohres,
- Fig. 4: eine Ansicht des Düsenrohres der Fig. 1 ohne Sprühdüse von hinten,
- Fig. 5: eine Seitenansicht des Düsenrohres der Fig. 4,
- Fig. 6: eine Ansicht auf die Schnittebene A-A aus Fig. 5,
- Fig. 7: eine isometrische Darstellung des gemäß Fig. 6 geschnittenen Düsenrohres,
- Fig. 8: eine Ansicht auf die Schnittebene B-B in Fig. 6,
- Fig. 9: eine Ansicht auf die Schnittebene C-C in Fig. 6,
- Fig. 10: eine Seitenansicht eines erfindungsgemäßen Düsenrohres gemäß einer zweiten bevorzugten Ausführungsform der Erfindung mit daran angeordneter Sprühdüse,
- Fig. 11: eine Draufsicht auf das Düsenrohr der Fig. 10,
- Fig. 12: eine Ansicht auf die Schnittebene A-A in Fig. 10,
- Fig. 13: eine perspektivische Ansicht des gemäß Fig. 12 geschnittenen Düsenrohres,
- Fig. 14: eine Seitenansicht des Düsenrohres der Fig. 10 ohne Sprühdüse,
- Fig. 15: eine Draufsicht auf das Düsenrohr der Fig. 14,
- Fig. 16: eine Ansicht auf die Schnittebene A-A des Düsenrohres der Fig. 14, wobei ein Rückschlagventil geschlossen ist,
- Fig. 17: eine Ansicht auf die Schnittebene A-A in Fig. 14, wobei das Rückschlagventil geöffnet ist,
- Fig. 18: eine Ansicht auf die Schnittebene B-B in Fig. 16,
- Fig. 19: eine Ansicht auf die Schnittebene C-C in Fig. 16,
- Fig. 20: eine im Wesentlichen der Fig. 16 entsprechende Darstellung des Düsenrohres, wobei zur Verdeutlichung ein radialer Abstand zwischen dem Absperrkörper und dem Düsenrohr bzw. dem Leitrohr und dem Düsenrohr übertrieb groß dargestellt ist,
- Fig. 21: die Einzelheit X aus Fig. 20,
- Fig. 22: die Einzelheit Y aus Fig. 20 und
- Fig. 23: eine der Einzelheit Y entsprechende Ansicht einer weiteren erfindungsgemäßen Ausführungsform.

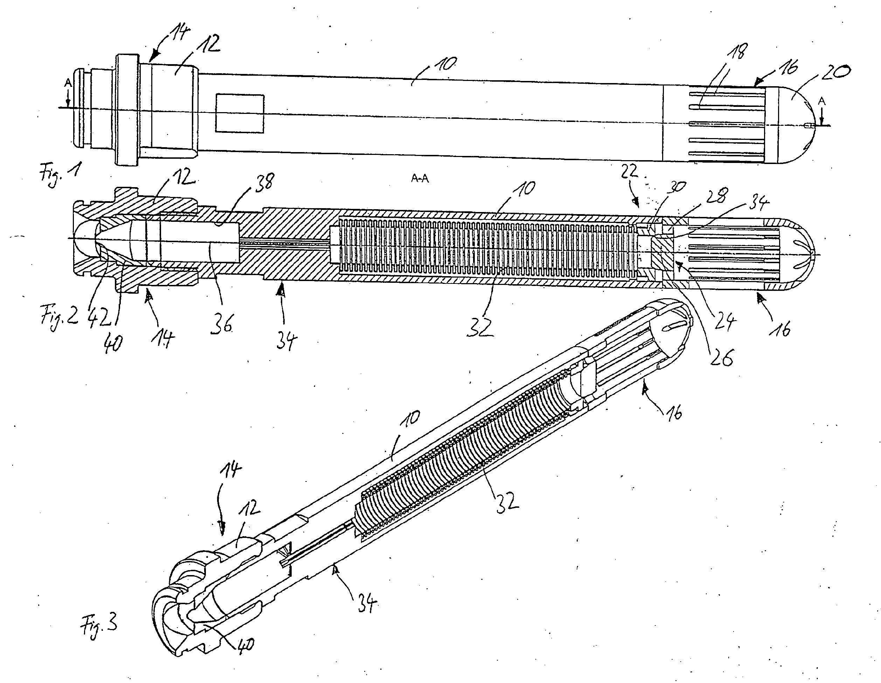

In der Darstellung der Fig. 1 ist ein Düsenrohr 10 zu erkennen, das an einem Ende mit einer Überwurfmutter 12 versehen ist, die zur Befestigung eines in Fig. 1 nicht erkennbaren Düsenmundstücks dient. Die Überwurfmutter 12 und das Düsenmundstück bilden eine Sprühdüse 14.

An dem, der Sprühdüse 14 gegenüberliegenden Ende ist das Düsenrohr 10 mit einem Filterbauteil 16 versehen. Das Filterbauteil 16 weist mehrere sich in Längsrichtung des Düsenrohres 10 erstreckende Eintrittsschlitze 18 auf und ist mit einer Filterkappe 20 versehen, die ebenfalls Eintrittsschlitze für Fluid aufweist.

Im Betrieb wird das Düsenrohr 10 in einen Anschweißnippel eines Spritzbalkens für zu versprühendes Fluid eingeführt, so dass wenigstens das Filterbauteil 16 innerhalb des Spritzbalkens angeordnet ist und die Sprühdüse 14 außerhalb des Spritzbalkens liegt. Zu versprühendes Fluid kann dann durch das Filterbauteil 16 in das Düsenrohr 10 eintreten und wird mittels der Sprühdüse 14 versprüht. Das Düsenrohr 10 ist für Entzunderungsdüsen vorgesehen, bei denen Fluid, beispielsweise Wasser, mit sehr hohen Drücken von mehreren 100 bar innerhalb einer Walzstraße auf eine heiße Metalloberfläche, beispielsweise Stahl oder Kupfer, gesprüht wird, um eine Zunderschicht auf der Metalloberfläche zu entfernen.

Um zu verhindern, dass nach dem Absenken eines Fluiddrucks wesentliche Mengen von Fluid noch aus der Sprühdüse 14 austreten, ist das Düsenrohr 10 mit einem Rückschlagventil 22 versehen, wie es in der Ansicht der Schnittebene A-A in Fig. 2 zu erkennen ist. Das Rückschlagventil 22 weist eine Ventilsitzscheibe 24 mit einem kegelstumpfförmigen Ventilsitz 26 und mehreren Durchlasskanälen 28 auf. Das Rückschlagventil 22 weist weiter einen ringförmigen Absperrkörper 30 auf, der mittels eines Wellrohres 32 mit dem Düsenrohr 10, das ein Ventilgehäuse für das Rückschlagventil 22 bildet, verbunden ist. Der Absperrkörper 30 liegt mit einem kreiszylinderförmigen Außenumfang an einer Innenwand des Düsenrohres 10 an oder hat lediglich einen geringen Abstand zur Innenwand und ist dadurch lediglich in Längsrichtung des Düsenrohres 10 verschiebbar. Mittels des Wellrohres 32 wird der Absperrkörper 30 in Richtung auf den Ventilsitz 26 vorgespannt.

Die Darstellung der Fig. 2 zeigt den geschlossenen Zustand des Rückschlagventils 22. Der Absperrkörper 30 weist eine konzentrische Durchgangsbohrung auf, wobei an einem Übergang zwischen einer kreisringförmigen Stirnfläche und der Durchgangsbohrung eine kreisringförmige Kante liegt. Mit dieser kreisringförmigen Kante liegt der ringförmige Absperrkörper 30 auf einer kegelstumpfförmigen Außenfläche 34 des Ventilsitzes 26 an und verhindert dadurch, dass Fluid am Ventilsitz 26 vorbei in das Innere des Wellrohres 32 und zu der Sprühdüse 14 gelangt.

Steigt der Fluiddruck am Ventilsitz 26 so weit an, dass die Vorspannkraft des Wellrohres 32 überwunden wird, wird der ringförmige Absperrkörper 30 in der Darstellung der Fig. 2 nach links geschoben und Fluid kann am Ventilsitz 26 vorbei und durch die Durchgangsbohrung im ringförmigen Absperrkörper 30 strömen. Sinkt der Fluiddruck am Ventilsitz 26 dann wird ab, wird der ringförmige Absperrkörper 30 durch die Federwirkung des Wellrohres 32 wieder gegen den Ventilsitz 26 gedrückt und eine Strömungsverbindung zwischen dem Filterbauteil 16 und der Sprühdüse 14 ist unterbrochen. Das ungewollte Sprühen/Spritzen der Düsen während ein geringer Vorfülldruck des Entzunderungsystems anliegt, kann damit zuverlässig verhindert werden. Dabei erzeugt der Vorfülldruck eine Kraft, die unterhalb der Vorspannkraft des Wellrohres 32 liegt. Außerdem kann ein Nachtropfen der Sprühdüse 14 dadurch zuverlässig verhindert werden.

Anhand der Darstellung der Fig. 2 ist zu erkennen, dass durch das Wellrohr 32 ein freier Strömungsquerschnitt stromabwärts des ringförmigen Absperrkörpers 30 nicht eingeschnürt wird. Der kleinste Innendurchmesser des Wellrohres 32 ist sogar geringfügig größer als ein Durchmesser der Durchgangsbohrung im Absperrkörper 30. Das Wellrohr 32 weist darüber hinaus eine beträchtliche Länge auf und der Absperrkörper 30 ist am stromaufwärts gelegenen Ende des Wellrohres 32 angeordnet. Beim Passieren des Ventilsitzes 26 und des Absperrkörpers 30 entstehende Turbulenzen können dadurch bereits im Verlauf des Wellrohres 32 abklingen. Die Anordnung des kegelstumpfförmigen Ventilsitzes 26 konzentrisch zu einer Mittellängsachse des Düsenrohres 10, wobei der ringförmige Absperrkörper 30 auf einer Außenfläche des Ventilsitzes 26 aufsitzt, ermöglicht eine strömungsgünstige Ausbildung des Rückschlagventils 22. Das die Durchlasskanäle 28 passierende Fluid strömt entlang dem sich verjüngenden Ventilsitz 26, passiert die Durchgangsbohrung im ringförmigen Absperrkörper 30 und gelangt dann in das Wellrohr 32. Ersichtlich ist beim Passieren des Rückschlagventils 22 keine starke Strömungsumlenkung erforderlich, vielmehr liegen die erforderlichen Strömungsumlenkungen jeweils deutlich unterhalb von 90°.

Stromabwärts des Wellrohres 32 ist ein Strahlrichter 34 angeordnet. Der Strahlrichter 34 ist einstückig mit dem Düsenrohr 10 ausgebildet und weist mehrere, sich radial nach innen erstreckende Strömungsleitflächen auf. Die Strömungsleitflächen laufen auf eine Mittellängsachse 36 des Düsenrohres 10 zu und sind parallel zu dieser Mittellängsachse 36 angeordnet. Der unmittelbar die Mittellängsachse 36 umgebende Bereich ist aber frei von Einbauten. Der Strahlrichter 34 wird aus diesem Grund auch als seelenloser Strahlrichter bezeichnet. Stromabwärts des Strahlrichters 34 schließt sich ein Fluidkanal 38 mit konstantem Querschnitt an. Dieser Fluidkanal 38 geht dann in ein Düsenmundstück 40 über, das den freien Querschnitt verjüngt und das eine Austrittsöffnung 42 aufweist. Das Düsenmundstück 40 wird mittels der Überwurfmutter 12 am Düsenrohr 10 gehalten.

Das Düsenrohr 10, das Filterbauteil 16 und der Strahlrichter 34 sind mittels eines Sinterverfahrens hergestellt. Dabei wird Metallpulver mit einem Kunststoffbinder vermischt und mittels Spritzguss in eine gewünschte Form gebracht. Nach dem Entfernen des Kunststoffbinders wird das Bauteil gesintert, so dass sich ein Metall-Sinterbauteil ergibt.

Dieses Herstellungsverfahren ermöglicht es, den Strahlrichter 34 mit dem Düsenrohr 10 zusammenzusintern und auch die Ventilsitzscheibe 24 mit dem Filterbauteil 16 zusammenzusintern. Die Filterkappe 20 kann als separates Bauteil hergestellt werden, wird dann aber ebenfalls mit dem übrigen Bestandteil des Filterbauteils 16 zusammengesintert.

Das Düsenmundstück 40 kann aus Hartmetall bestehen und ebenfalls als Sinterbauteil hergestellt werden und wird auch als Hartmetalleinsatz bezeichnet.

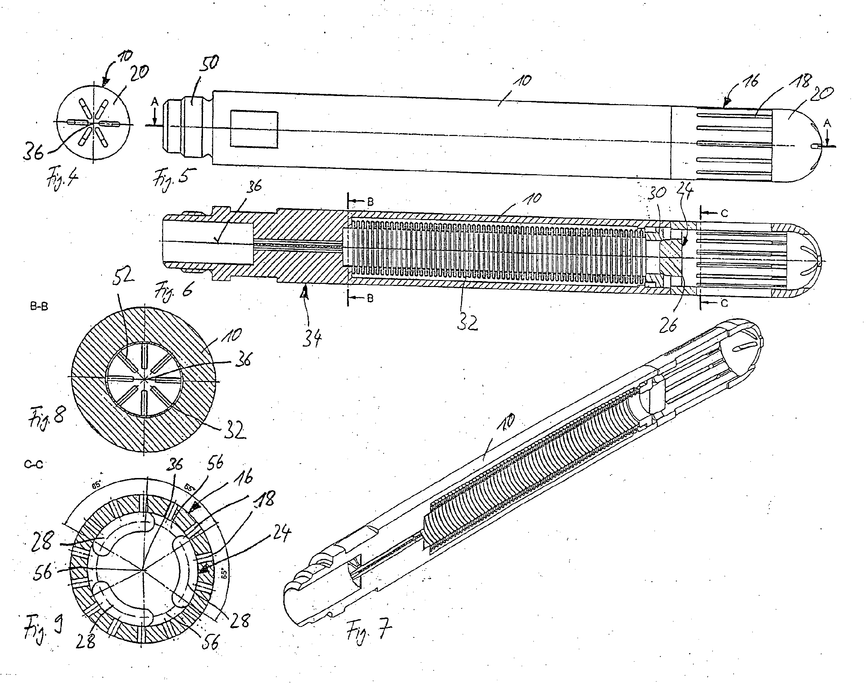

Die Darstellung der Fig. 4 zeigt das Düsenrohr 10 ohne die Sprühdüse 14 in einer Draufsicht, so dass lediglich die Filterkappe 20 zu erkennen ist. Zu erkennen sind insgesamt fünf sternförmig auf die Mittellängsachse 36 des Düsenrohres 10 zu laufende Eintrittsschlitze.

Die Darstellung der Fig. 5 zeigt das Düsenrohr 10 in einer Seitenansicht, wobei die Überwurfmutter 12, die auch als Mundstückgehäuse bezeichnet wird, nicht aufgeschraubt ist. An seinem vorderen, in der Darstellung der Fig. 5 linken Ende weist das Düsenrohr 10 ein Außengewinde 50 auf, um die Überwurfmutter 12 aufzuschrauben. Wie bereits ausgeführt wurde, sind das Düsenrohr 10 und das Filterbauteil 16 zusammengesintert oder lasergeschweißt, so dass sich eine unlösbare Einheit ergibt.

Die Darstellung der Fig. 6 zeigt eine Ansicht der Schnittebene A-A aus Fig. 5, wobei zur Vermeidung von Wiederholungen die bereits erläuterten Bestandteile nicht erneut beschrieben werden.

Anhand der Darstellung der Fig. 6 ist zu erkennen, dass das Wellrohr 32 an dem ringförmigen Absperrkörper 30 mit einem ersten Ende befestigt ist, das den ringförmigen Absperrkörper 30 auf einer Außenseite umgreift. Eine Verbindungsstelle zwischen Wellrohr 32 und dem ringförmigen Absperrkörper 30 liegt damit außerhalb des Bereichs, in dem das Fluid durch die Durchgangsbohrung im Absperrkörper 30 hindurch strömt. Am stromabwärts gelegenen Ende des Wellrohres 32 ist das zweite Ende dann auf der Innenseite einer passenden Bohrung im Düsenrohr 10 angeschweißt, die dann in den Strahlrichter 34 übergeht.

Die Darstellung der Fig. 7 zeigt eine isometrische Darstellung des gemäß Fig. 6 geschnittenen Düsenrohres 10.

Die Darstellung der Fig. 8 zeigt eine Ansicht der Schnittebene B-B aus Fig. 6. In dieser Schnittansicht sind Strömungsleitflächen 52 des Strahlrichters 34 zu erkennen, die sich radial auf die Mittellängsachse 36 des Düsenrohres zu erstrecken und parallel zur Mittellängsachse 36 angeordnet sind. Ein unmittelbar die Mittellängsachse 36 umgebender Bereich ist dabei frei von Einbauten. In der Darstellung der Fig. 8 zu erkennen ist das kreiszylindrische Ende des Wellrohres 32.

Die Darstellung der Fig. 9 zeigt eine Ansicht auf die Schnittebene C-C aus Fig. 6. Zu erkennen ist das Filterbauteil 16 mit den in der rohrförmigen Wandung des Filterbauteils 16 radial angeordneten Einlassschlitzen 18. Die Einlassschlitze 18 sind gleichmäßig beabstandet um den Umfang des Filterbauteils 16 angeordnet.

Ebenfalls zu erkennen ist die Ventilsitzscheibe 26 sowie speziell drei Durchlasskanäle 28 in der Ventilsitzscheibe. Die drei Durchlasskanäle 28 sind jeweils in Form eines sich bogenförmig erstreckenden Langloches ausgebildet. Eine Mittellinie der bogenförmigen Langlöcher 28 liegt auf einem Kreis, der die Mittellängsachse 36 des Düsenrohres konzentrisch umgibt. Eine radial außen liegende Wandung der bogenförmigen Langlöcher 28 fällt mit einer Innenwandung des Filterbauteils 16 zusammen. Nach innen, auf die Mittellängsachse 36 zu, erstrecken sich die bogenförmigen Langlöcher bis an den Ventilsitz 24, wie in der Schnittansicht der Fig. 6 zu erkennen ist.

Die Enden der bogenförmigen Langlöcher 28 sind jeweils halbkreisförmig gestaltet, wobei die Mittelpunkte dieser Halbkreise um einen Winkel von 65° voneinander beabstandet sind. Die Mittelpunkte der halbkreisförmigen Enden zweier aneinander angrenzender Langlöcher 28 sind um 55° voneinander beabstandet.

Mittels der drei bogenförmigen Langlöcher 28 lässt sich ein großer freier Strömungsquerschnitt und ein geringer Strömungswiderstand durch die Ventilsitzscheibe 24 hindurch erzielen, wobei gleichzeitig die verbleibenden Stege 56 zwischen den bogenförmigen Langlöchern 28 stabil genug sind, um auch sehr hohen Fluiddrücken von mehreren hundert bar standzuhalten.

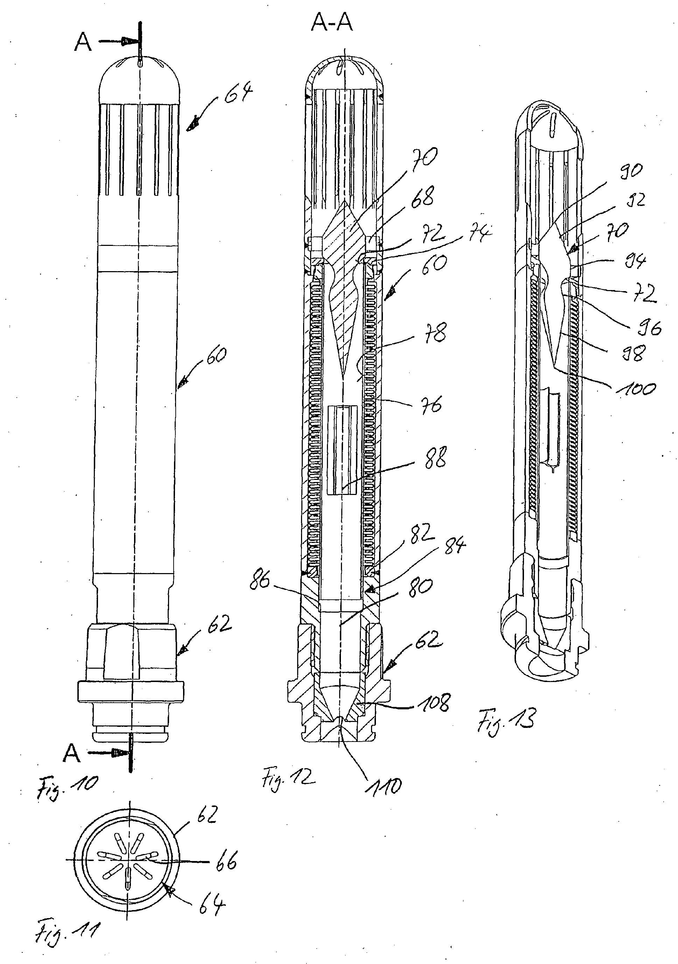

In der Darstellung der Fig. 10 ist ein Düsenrohr 60 in einer Seitenansicht zu erkennen, an dessen stromabwärts gelegenen Ende eine Sprühdüse 62 angeordnet ist. Das Düsenrohr 60 ist dazu vorgesehen, in eine Zuführleitung bzw. einem Spritzbalken für zu versprühendes Fluid eingeführt zu werden, wobei dann wenigstens ein Filterabschnitt 64 des Düsenrohres in der Zuführleitung liegt und eine Verbindung zwischen Zuführleitung und Sprühdüse 62 abgedichtet ist, so dass die Sprühdüse 62 abschnittsweise außerhalb der Zuführleitung liegt und dadurch Fluid ausgeben kann.

Die Sprühdüse 62 ist auf das stromabwärts gelegene Ende des Düsenrohres 60 aufgeschraubt.

In der Draufsicht der Fig. 11 ist vor allem der Filter 64 mit mehreren Eintrittschlitzen 66 zu erkennen, wobei der Filter 64 im Prinzip gleich aufgebaut ist wie der bereits anhand der Fig. 1 bis 9 beschriebene Filter 16.

In der Schnittansicht der Fig. 12 ist das innerhalb des Düsenrohres 60 angeordnete Rückschlagventil zu erkennen. Das Rückschlagventil weist eine Ventilsitzscheibe 68 mit einem Stromlinienkörper 70 auf, der in einem sich in Strömungsrichtung kegelförmig verjüngenden Bereich einen Ventilsitz 72 bildet. Auf diesem Ventilsitz 72 liegt in der Position, die in Fig. 12 dargestellt ist, ein ringförmiger Absperrkörper 74 auf, der dadurch einen Fluiddurchgang durch das Düsenrohr 60 versperrt. Der ringförmige Absperrkörper 74 ist mit einem Wellrohr 76 und einem innerhalb des Wellrohres angeordneten Leitrohres 78 fest verbunden, beispielsweise verschweißt. Der ringförmige Absperrkörper 74 liegt einerseits am Ventilsitz 72 des Stromlinienkörpers 70 und andererseits an einer Innenseite des Düsenrohres 60 an und ist parallel zu einer Mittellängsachse 80 des Düsenrohres 60 verschiebbar angeordnet. Ausgehend von der in Fig. 12 dargestellten Stellung kann der Absperrkörper 74 somit vom Ventilsitz 72 abgehoben werden, wenn er in der Darstellung der Fig. 12 nach unten bewegt wird.

Das Wellrohr 76 ist an seinem, dem Absperrkörper 74 gegenüberliegenden Ende in einem Bereich 82 mit dem Düsenrohr 60 verschweißt. Das Leitrohr 78 hingegen ist mit seinem, dem Absperrkörper 74 gegenüberliegenden Ende in einem Bereich 84 verschiebbar im Düsenrohr 60 aufgenommen. Das Leitrohr 78 liegt hierzu mit seiner Außenwandung im Bereich 84 an einer Innenwandung des Düsenrohres 60 an, wobei eine Passung zwischen Leitrohr 78 und Düsenrohr 60 so gewählt ist, dass das Leitrohr 78 parallel zur Mittellängsachse 80 verschoben werden kann.

Das Wellrohr 76 ist in der in Fig. 12 dargestellten Position vorgespannt und drückt dadurch den Absperrkörper 74 gegen den Ventilsitz 72 am Stromlinienkörper 70. Steigt ein Fluiddruck stromaufwärts des Absperrkörpers 74 über einen vordefinierten Wert an, der durch die Vorspannkraft des Wellrohres 76 definiert ist, wird der Absperrkörper 74 in Strömungsrichtung, in der Darstellung der Fig. 12 also nach unten, verschoben und Fluid kann zwischen dem Absperrkörper 74 und dem Ventilsitz 72 hindurch in das Innere des Leitrohres 78 und zu der Sprühdüse 62 gelangen. Bei einer Bewegung des Absperrkörpers 74 in Strömungsrichtung, in Fig. 12 nach unten, wird das Wellrohr 76 zusammengedrückt und das Leitrohr 78 wird gleichfalls nach unten bewegt und gleitet dann im Bereich 84 auf der Innenseite des Düsenrohres 60. Das Düsenrohr 60 weist stromabwärts des Bereichs 84 des Leitrohrs 78 einen umlaufenden Absatz 86 auf, der als Anschlag für das Leitrohr 78 dient. Sobald das dem Absperrkörper 74 gegenüberliegende Ende des Leitrohrs 78 an diesen umlaufenden Anschlag 86 des Düsenrohres 60 angekommen ist, wird die Bewegung des Absperrkörpers 74 in Strömungsrichtung gestoppt und ein maximaler geöffneter Querschnitt des Rückschlagventils ist erreicht.

Stromabwärts des Stromlinienkörpers 70 ist in das Leitrohr 78 ein Strahlrichter 88 eingesetzt. Der Strahlrichter 88 weist einen die Mittellängsachse 80 konzentrisch umgebenden rohrförmigen Bereich auf, so dass also Fluid in dem die Mittellängsachse unmittelbar konzentrisch umgebenden Bereich strömen kann. Dieser rohrförmige Abschnitt wird durch insgesamt vier sich in radialer Richtung erstreckende Strömungsleitflächen, die sich bis zu einer Innenseite des Leitrohres 78 erstrecken, gehalten. Die Außenkanten der Leitflächen, die auf der Innenseite des Leitrohres 78 anliegen, sind mit dem Leitrohr beispielsweise verschweißt.

Die Sprühdüse 62 ist im Wesentlichen identisch zu der bereits anhand der Fig. 1 bis 3 beschriebenen Sprühdüse 14 und wird daher nicht erneut erläutert.

Die Darstellung der Fig. 13 läßt die Form des Stromlinienkörpers 70 genauer erkennen. In Strömungsrichtung gesehen weist der Stromlinienkörper 70 eine gegen die Strömung gerichtete Spitze 90 auf, an die sich ein kreiskegelförmiger Bereich 92 anschließt, der sich in Strömungsrichtung erweitert. Der sich erweiternde, kreiskegelförmige Bereich 92 geht dann in einen Bereich 94 über, in dem die Außenwände des Stromlinienkörpers 70 parallel zur Mittellängsachse 80 verlaufen. Der Stromlinienkörper 70 ist in dem kreiszylindrischen Bereich 94 mit der Ventilsitzscheibe 68 verbunden. Der Stromlinienkörper 70 kann einstückig mit der Ventilsitzscheibe 68 ausgebildet sein. Der Bereich 94 ist dadurch nicht über den gesamten Umfang ausgebildet, vielmehr geht der Stromlinienkörper 70 hier in die Wandungen von Durchgangsbohrungen in der Ventilsitzscheibe 68 über, die den Stromlinienkörper 70 im Bereich 94 radial außen umgeben.

An den Bereich 94, in dem der Stromlinienkörper 70 mit der Ventilsitzscheibe 68 verbunden ist, schließt sich der kegelförmig verjüngende Bereich des Ventilsitzes 72 an. Der sich kegelförmig erweiternde Bereich 92 weist am Übergang zum Bereich 94 somit einen größeren Radius auf als der Innenradius des Absperrkörpers 74. Anschließend an den sich kegelförmig verjüngenden Ventilsitz 72 schließt sich ein in Strömungsrichtung gesehen erweiternder Bereich 96 an. Ein Übergang zwischen dem sich in Strömungsrichtung gesehen verjüngenden Ventilsitz 72 und dem sich erweiternden Bereich 96 ist ausgerundet. Der sich erweiternde Bereich 96 geht dann wieder in einen sich kegelförmig verjüngenden Bereich 98 über, der dann an einer Endspitze 100 endet, die auf der Mittellängsachse 80 liegt. Durch diese Formgebung des Stromlinienkörpers 70 läßt sich überraschenderweise ein geringer Strömungswiderstand durch das Rückschlagventil erzielen und ein gutes und zeitlich gesehen konstantes Sprühbild der Düse 72 wird erzielt. Überraschend ist dabei die sich positiv auf den Strömungswiderstand und das Sprühbild auswirkende Formgebung des Stromlinienkörpers 70 stromabwärts des Ventilsitzes 72, mit dem sich zunächst wieder erweiternden Bereich 96 und dem sich dann sanft verjüngenden Bereich 98, der an der Endspitze 100 endet. Der sich verjüngende Bereich 98 nimmt dabei fast die Hälfte der Länge des gesamten Stromlinienkörpers 70 ein. Der sich kegelförmig ausgehend von der Spitze 90 erweiternde Bereich 92 nimmt dahingegen lediglich etwa ein Fünftel der Länge des Gesamtstromlinienkörpers 70 ein.

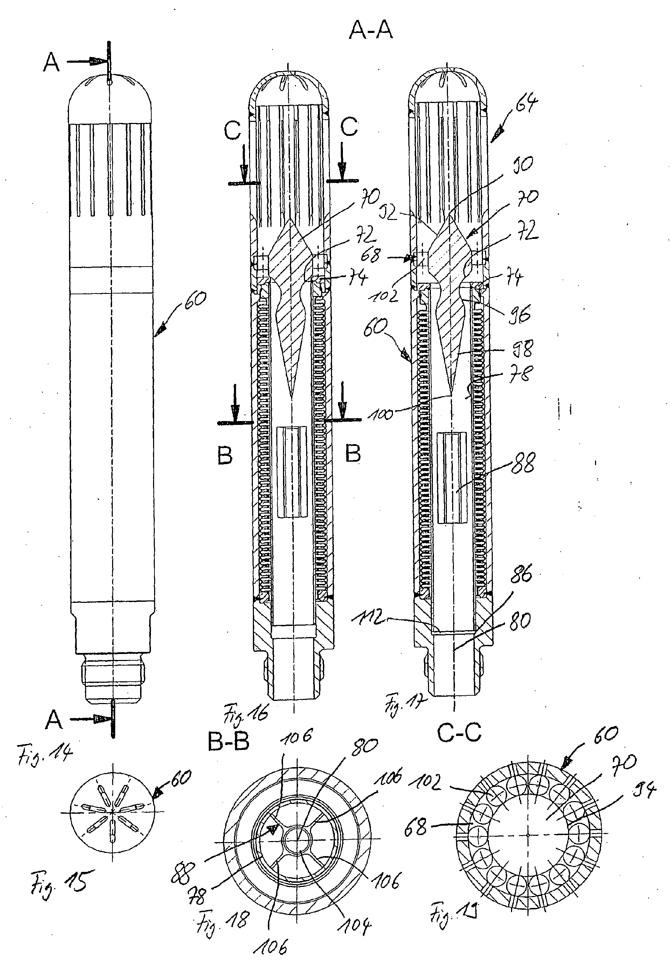

Die Darstellung der Fig. 14 zeigt das Düsenrohr 60 bei abgenommener Sprühdüse. Fig. 15 zeigt eine Draufsicht auf das in Fig. 14 dargestellte Düsenrohr 60. In der Schnittansicht der Fig. 16 ist das Rückschlagventil im geschlossenen Zustand dargestellt, in dem also der ringförmige Absperrkörper 74 an dem Ventilsitz 72 am Stromlinienkörper 70 anliegt.

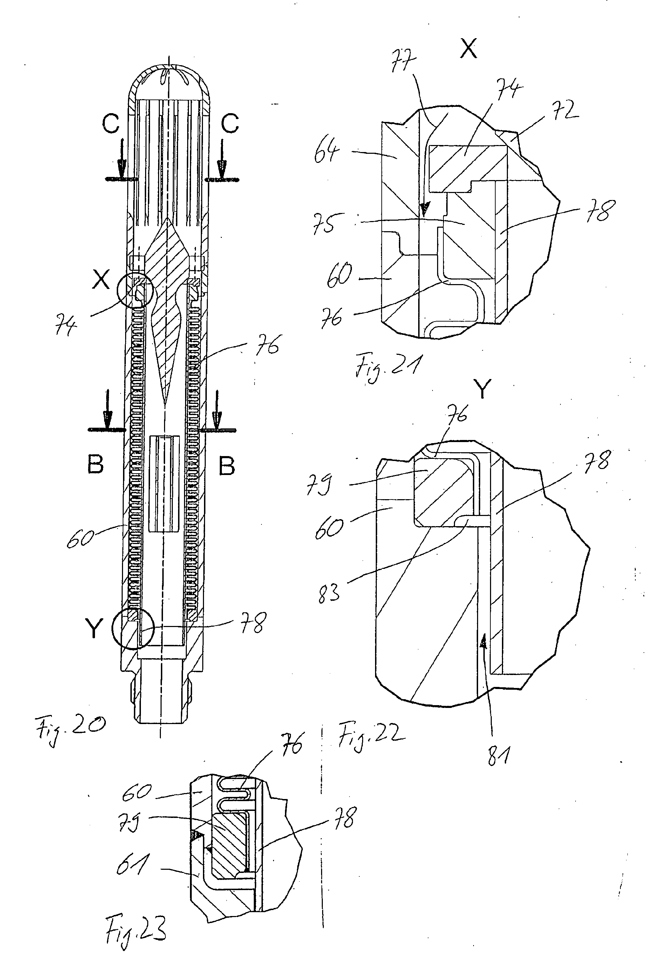

Fig. 17 zeigt das Rückschlagventil im geöffneten Zustand. Der ringförmige Absperrkörper 74 liegt dabei nicht mehr am Ventilsitz 72 an, so dass nun Fluid am Stromlinienkörper 70 vorbei, durch den Strahlrichter 88 und zu der Sprühdüse gelangen kann. In einer Zuführleitung vorhandenes Fluid tritt infolgedessen durch den Filter 64 in das Düsenrohr 60 ein und trifft auf die Spitze 90 des Stromlinienkörpers 70. Durch den sich kegelförmig erweiternden Bereich 92 wird das Fluid dann auf die Ventilsitzscheibe 68 geleitet und kann dann Durchgangsbohrungen 102 in der Ventilsitzscheibe 68 passieren. Die Durchgangsbohrungen 102 in der Ventilsitzscheibe 68 sind in der Schnittansicht der Fig. 20 zu erkennen. Insgesamt sind 14 kreiszylindrische Durchgangsbohrungen 102, die den Stromlinienkörper 70 umgeben, vorgesehen. Die Durchgangsbohrungen 102 sind dabei so bemessen, dass sie an den Bereich 94 des Stromlinienkörpers anstoßen und sich andererseits auch bis zu einer Innenwandung des Düsenrohres 60 erstrecken. Zwischen den Durchgangsbohrungen 102 sind dadurch Speichen an der Ventilsitzscheibe 68 ausgebildet, die den Stromlinienkörper 70 in Position halten.

Anstelle von kreiszylindrischen Durchgangsbohrungen 102 können die Durchgangsbohrungen auch in Form gekrümmter Langlöcher ausgebildet sein, beispielsweise könnte eine Speiche zwischen jeweils zwei Durchgangsbohrungen 102 ebenfalls durchgebohrt sein, um einen freien Strömungsquerschnitt noch weiter zu erhöhen. Solche Durchgangsbohrungen in Form gekrümmter Langlöcher wurden bereits anhand der Fig. 9 beschrieben.

Nach Passieren der Durchgangsbohrungen 102 in der Ventilsitzscheibe 68 tritt das Fluid zwischen dem Ventilsitz 72 und dem ringförmigen Absperrkörper 74 hindurch. Wie anhand der Fig. 17 gut zu erkennen ist, wird das Fluid dabei nach innen in Richtung auf die Mittellängsachse 80 umgelenkt und dann durch den ausgerundeten Übergang zwischen dem sich verjüngenden Ventilsitz 72 und dem sich daran anschließenden, wieder erweiternden Bereich 96 allmählich wieder nach außen in Richtung auf die Innenwand des Leitrohres 78 umgelenkt. Nach Passieren des lokalen Maximums zwischen den Bereichen 96 und 98 des Stromlinienkörpers 70 wird der freie Strömungsquerschnitt wieder größer und das Fluid kann sich dann parallel zu dem sich verjüngenden Bereich 98 bzw. parallel zum Leitrohr 78 weiter bewegen.

Nachdem das Fluid die Endspitze 100 des Stromlinienkörpers 70 passiert hat, kann es den vollständigen Innenraum des Leitrohres 78 einnehmen, bis es auf den Strahlrichter 88 auftrifft. Die Form des Strahlrichter 88 ist gut in der Schnittansicht der Fig. 19 zu erkennen. Der Strahlrichter 88 weist einen kreisrohrförmigen Bereich 104 auf, der einen Fluiddurchgang im unmittelbar an die Mittellängsachse 80 angrenzenden Bereich ermöglicht. Von dem kreisrohrförmigen Bereich 104 gehen radial insgesamt vier Strömungsleitflächen 106 aus, die gleichmäßig voneinander beabstandet sind. Jeweils zwei Strömungsleitflächen 106 schließen zwischen sich einen Winkel von 90° ein. Die außen liegenden Kanten der Strömungsleitflächen 106 sind an der Innenseite des Leitrohres 78 fixiert.

Nach Passieren des Strahlrichters 88 schließt sich ein Strömungskanalabschnitt mit konstantem Querschnitt an, der durch den Innendurchmesser des Leitrohres 78 definiert ist. Dieser Strömungskanal mit konstantem Querschnitt erstreckt sich bis zu einer kegelartigen Verjüngung im Düsenmundstück 108, siehe Fig. 12, an das sich dann die Austrittsöffnung 110 anschließt. Unterbrochen wird dieser Strömungskanalabschnitt mit konstantem Durchmesser lediglich durch einen kleinen Zwischenraum 112 zwischen dem stromabwärts gelegenem Ende des Leitrohres 78 und dem Absatz 86 am Düsenrohr 60. Dieser Strömungskanalabschnitt mit konstantem Querschnitt ist, siehe Fig. 12, länger als der Strahl richter 88 und auch länger als der Stromlinienkörper 70. Dadurch kann eine Beruhigung der Strömung im Düsenrohr 60 vom Strahlrichter 88 bis zur Austrittsöffnung 110 erreicht werden, wodurch sich ein sehr gutes Sprühbild der Düse 62 ergibt.

Das Wellrohr 76 ist im Betrieb des Düsenrohres 60 sowohl im geschlossenen Zustand der Fig. 16 als auch im geöffneten Zustand der Fig. 17 beidseitig von unter Druck stehendem Fluid umgeben. Dadurch bleibt das Wellrohr in der in den Fig. 16 und 17 dargestellten Lage und wird nicht seitlich gegen das Wellrohr 78 oder die Innenwand des Düsenrohrs 60 gedrückt. Da gerade bei Entzunderungsdüsen mit sehr hohen Fluiddrücken von mehreren 100 bar gearbeitet wird, ist dadurch der Einsatz des Wellrohrs 76 anstelle einer Schraubenfeder überhaupt möglich. In dem geschlossenen Zustand der Fig. 16 gelangt Fluid außen an dem ringförmigen Absperrkörper 44 vorbei und strömt dann zwischen dem Außenumfang des Absperrkörpers 74 und dem Innenumfang des Filtergehäuses 64 bzw. dem Innenumfang des Düsenrohres 60 in den Zwischenraum zwischen dem Wellrohr 76 und dem Düsenrohr 60. Im Bereich des in Fig. 16 unteren Endes des Wellrohres 76 kann das Fluid dann aber nicht mehr aus diesem Zwischenraum austreten, da ja das Wellrohr 76 an seinem, dem Absperrkörper 74 gegenüberliegenden Ende in dem Bereich 82 mit dem Düsenrohr 60 verschweißt ist. Das Wellrohr 76 wird dadurch von seiner radial außen liegenden Seite durch unter Druck stehendem Fluid beaufschlagt, dieses Fluid kann aber nicht durch das Düsenrohr und speziell nicht zur Sprühdüse 62 gelangen.

Auf seiner radial innen liegenden Seite wird das Wellrohr 76 ebenfalls durch unter Druck stehende Flüssigkeit beaufschlagt. Unter Druck stehendes Fluid kann zwischen dem Leitrohr 78 und dem Bereich 84, siehe Fig. 12, des Düsenrohres 60 in den Zwischenraum zwischen dem Gleitrohr 78 und dem Wellrohr 76 eindringen. Jedenfalls im geöffneten Zustand der Fig. 17 ist dadurch das Wellrohr 76 sowohl auf seiner radial innen liegenden Seite als auch auf seiner radial außen liegenden Seite durch unter Druck stehendes Fluid beaufschlagt. Ein Fluiddruck auf der radial innen liegenden und der radial außen liegenden Seite des Wellrohrs 76 ist dadurch im Gleichgewicht und hebt sich auf, so dass das Wellrohr 76 den Absperrkörper 74 mit einer vorbestimmten Federkraft in Richtung auf den Ventilsitz 72 vorspannen kann.

Die Darstellung der Fig. 20 zeigt eine Fig. 16 vergleichbare Darstellung, wobei im Bereich der Einzelheiten X und Y ein Abstand in radialer Richtung zwischen einem Innenumfang des Düsenrohres 60 und dem Absperrkörper 74 bzw. dem Leitrohr 78 übertrieben dargestellt wurde. Dies, um zu verdeutlichen, dass Fluid sowohl in den Bereich zwischen der Innenseite des Düsenrohres 60 und dem Wellrohr 76 als auch in dem Bereich zwischen der Innenseite des Wellrohres 76 und dem Leitrohr 78 eindringen kann.

Die Darstellung der Fig. 21 zeigt die Einzelheit X aus Fig. 20 in vergrößerter Darstellung. Der Absperrkörper 74 liegt auf seiner radial innen liegenden Seite mit seiner in Fig. 21 oberen Kante an dem Ventilsitz 72 an. An den Absperrkörper 74 schließt sich in Strömungsrichtung gesehen das Leitrohr 78 sowie auch das Wellrohr 76 an, das ja mit dem Absperrkörper 74 über einen Zwischenring 75 verbunden ist, wobei mit dem Zwischenring 75 auch das stromaufwärts liegende Ende des Leitrohres 78 verbunden ist. Unter Druck stehendes Fluid kann nun gemäß dem Pfeil 77 zwischen einem radial außen liegenden Umfang des Absperrkörpers 74 und einer radial innen liegenden Innenseite des Filterabschnitts 64 bzw. des Düsenrohres 60 hindurchströmen und dadurch eine radial außen liegende Seite des Wellrohres 76 mit Druck beaufschlagen. Wie erläutert wurde, erfolgt eine Strömung von Fluid gemäß dem Pfeil 77 nur so lange, bis der Zwischenraum zwischen dem Düsenrohr 60 und dem Wellrohr 76 vollständig mit Fluid gefüllt ist. Eine Durchströmung von Fluid in Richtung auf das stromabwärts gelegene Ende des Düsenrohres ist dahingegen nicht möglich.

Die Darstellung der Fig. 22 zeigt das stromabwärts gelegene Ende des Wellrohres 76. Wie bereits erläutert wurde, ist das stromabwärts gelegene Ende des Wellrohres 76 an einem Befestigungsring 79 flüssigkeitsdicht befestigt, beispielsweise verschweißt, wobei der Befestigungsring 79 dann, siehe Fig. 12, ebenfalls flüssigkeitsdicht mit dem Düsenrohr 60 verbunden, insbesondere verschweißt ist.

Wie in Fig. 22 gut zu erkennen ist, liegt zwischen einer Innenseite des Düsengehäuses 60 und einer Außenseite des Leitrohres 78 ein Abstand, so dass ein ringförmiger Spalt definiert ist, durch den in Richtung eines Pfeiles 81 Fluid zwischen dem Leitrohr 78 und dem Düsengehäuse 60 in den Bereich zwischen dem Leitrohr 78 und dem Wellrohr 76 gelangen kann. Jedenfalls im geöffneten Zustand des Ventils ist dadurch das Wellrohr 76 sowohl radial außen als auch radial innen mit unter Druck stehendem Fluid beaufschlagt, so dass sich in radialer Richtung keine wesentlichen resultierenden Kräfte ergeben. Wie anhand der Fig. 21 zu erkennen ist, kann Fluid gemäß dem Pfeil 81 nur so lange in den Zwischenraum zwischen Leitrohr 78 und Wellrohr 76 strömen, bis dieser Zwischenraum vollständig mit Fluid ausgefüllt ist, da, siehe Fig. 21, das Wellrohr 76 flüssigkeitsdicht mit dem Zwischenring 75 verbunden ist und auch das Leitrohr 78 flüssigkeitsdicht mit dem Zwischenring 75 verbunden ist.

Gemäß Fig. 22 liegt der Befestigungsring 79 auf einem Absatz des Düsengehäuses 60 auf und auf der radial innen liegenden Seite des Befestigungsrings 79 ist eine ringförmige Aussparung 83 vorgesehen. Durch die Aussparung 83 kann sichergestellt werden, dass der Befestigungsring 79 unmittelbar auf dem Absatz des Düsengehäuses 60 aufliegt, da das Wellrohr 76 geringfügig in die Aussparung 83 hineinragen kann, ohne die Auflage des Befestigungsrings 79 am Düsengehäuse 60 zu beeinflussen.

In der Darstellung der Fig. 23 ist eine Einzelheit dargestellt, die der Einzelheit Y der Fig. 22 entspricht. Im Unterschied zu der Ausführungsform der Fig. 22 liegt gemäß Fig. 23 der Befestigungsring 79 nicht mehr auf dem Absatz des Düsengehäuses 60 auf, sondern ist lediglich mit der Innenseite des Düsenrohres 60 mittels einer Schweißnaht verbunden. Wie Fig. 23 zu entnehmen ist, kann der Befestigungsring 79 dadurch in und entgegen der Strömungsrichtung durch das Rückschlagventil verschoben werden. Dies wird beim Zusammenbau des Rückschlagventils dazu benutzt, eine Vorspannung des Wellrohres 76 exakt auf den vorgegebenen Wert einzustellen. Beim Zusammenbau wird der Befestigungsring 79 mit dem daran angeschweißten Wellrohr 76 in das Düsenrohr 60 eingeschoben, noch bevor das stromabwärts gelegene Unterteil 61 des Düsenrohres 60 angeschweißt wird. Der Befestigungsring 79 wird dann in Längsrichtung des Düsenrohres 60 verschoben, bis die definierte Vorspannung des Wellrohres 76 erreicht ist und dann mit dem Düsenrohr 60 verschweißt.

## Patentansprüche

1. Rückschlagventil für eine Sprühdüse, mit einem Ventilgehäuse, einem Absperrkörper (30; 74) und einem Ventilsitz (26; 72), wobei der Absperrkörper (30; 74) wenigstens in einer Längsrichtung des Ventilgehäuses beweglich angeordnet ist, wobei der Absperrkörper (30; 74) mittels eines parallel zur Längsrichtung angeordneten Wellrohres (32; 76) mit dem Ventilgehäuse verbunden ist, wobei der Absperrkörper (30; 74) mittels einer Federwirkung des Wellrohres (32; 76) in Richtung auf den Ventilsitz (26; 72) vorgespannt ist, **dadurch gekennzeichnet, dass** der Absperrkörper (30; 74) in Durchflussrichtung gesehen an einem stromaufwärts gelegenen Ende des Wellrohres (32; 76) angeordnet ist.

2. Rückschlagventil nach Anspruch 1, **dadurch gekennzeichnet, dass** das Wellrohr (32; 76) sowohl auf seiner radial innen liegenden Innenseite als auch auf seiner radial außen liegenden Außenseite wenigstens im geöffneten Zustand des Rückschlagventils mit unter Druck stehendem zu versprühendem Fluid beaufschlagt ist.

3. Rückschlagventil nach Anspruch 1 oder 2, **dadurch gekennzeichnet, dass** innerhalb des Wellrohrs (76) ein Leitrohr (78) vorgesehen ist, wobei das Leitrohr (78) Teil eines Fluidkanals durch das Rückschlagventil bildet.

4. Rückschlagventil nach Anspruch 3, **dadurch gekennzeichnet, dass** das Leitrohr (78) an einem Ende fest mit dem Absperrkörper (74) verbunden und am anderen Ende relativ zum Ventilgehäuse verschiebbar gelagert ist.

5. Rückschlagventil nach einem der vorstehenden Ansprüche, **dadurch gekennzeichnet, dass** der Ventilsitz (26; 72) an einer Ventilsitzscheibe (24; 68) vorgesehen ist, die in einen Fluidkanal des Rückschlagventils eingesetzt und mit wenigstens einem Durchlasskanal (28; 102) versehen ist.

6. Rückschlagventil nach Anspruch 5, **dadurch gekennzeichnet, dass** der wenigstens eine Durchlasskanal (28; 102) mittels einer Durchgangsbohrung und/oder einer Nut in der Ventilsitzscheibe (24; 68) ausgebildet ist.

7. Rückschlagventil nach einem der vorstehenden Ansprüche, **dadurch gekennzeichnet, dass** der Ventilsitz (72) Teil eines Stromlinienkörpers (70) ist.

8. Rückschlagventil nach Anspruch 7, **dadurch gekennzeichnet, dass** der Absperrkörper (74) ringförmig ausgebildet ist und sich der Stromlinienkörper (70) durch den Absperrkörper hindurch erstreckt.

9. Rückschlagventil nach Anspruch 7 oder 8, **dadurch gekennzeichnet, dass** der Stromlinienkörper (70) sich im Bereich des Ventilsitzes (72) in Strömungsrichtung verjüngt und stromabwärts des Ventilsitzes (72) wieder erweitert.

10. Rückschlagventil nach Anspruch 9, **dadurch gekennzeichnet, dass** sich der Stromlinienkörper (70) anschließend an die Erweiterung (96), die stromabwärts des Ventilsitzes (72) angeordnet ist, wieder bis zu einer Endspitze (100) verjüngt.

11. Düsenrohr mit Filter zum Einstecken in eine Zuführleitung mit einem Rückschlagventil nach einem der vorstehenden Ansprüche.

12. Düsenrohr nach Anspruch 11, **dadurch gekennzeichnet, dass** innerhalb des Wellrohres (76) ein Leitrohr (78) vorgesehen ist und der Ventilsitz (72) Teil eines Stromtinienkörpers (70) ist und dass stromabwärts des Stromlinienkörpers (70) in dem Leitrohr (78) ein Strahlrichter (88) angeordnet ist.

13. Düsenrohr nach Anspruch 12, **dadurch gekennzeichnet, dass** der Strahlrichter (34; 88) mehrere Strömungsleitflächen (52; 102) aufweist, die sich in radialer Richtung auf eine Mittellängsachse (36; 80) des Strahlrichters (34; 88) zu erstrecken, wobei ein die Mittellängsachse (36; 80) unmittelbar umgebender Bereich frei von Einbauten ist.

14. Düsenrohr nach Anspruch 12 oder 13, **dadurch gekennzeichnet, dass** stromabwärts des Strahlrichters (34; 88) ein Fluidkanal (38) mit konstantem Querschnitt angeordnet ist.

## Claims

1. A check valve for a spray nozzle comprising a valve body, a shut-off member (30; 74), and a valve seat (26; 72), wherein said shut-off member (30; 74) is mounted for movement at least in a longitudinal direction of the valve body, wherein said shut-off member (30; 74) is connected to the valve body by means of a corrugated tube (32; 76) disposed in parallel to the longitudinal direction, wherein said shut-off member (30; 74) is biased toward the valve seat (26; 72) by means of a spring effect of the corrugated tube (32; 76), **characterized in that** said shut-off member (30; 74) is disposed, as regarded in the direction of flow, at an upstream end of said corrugated tube (32; 76).

2. The check valve according to claim 1, **characterized in that**, at least in the opened state of the check valve, said corrugated tube (32; 76) is subjected, both on its radially inwardly located interior surface and on its radially outwardly located exterior surface, to the action of the pressurized fluid to be sprayed.

3. The check valve according to claim 1 or 2, **characterized in that** a shroud tube (78) is provided within the corrugated tube (76), wherein said shroud tube (78) forms part of a fluid channel through said check valve.

4. The check valve according to claim 3, **characterized in that** said shroud tube (78) is fixedly connected at one end to said shut-off member (74) and is at its other end mounted to be displaceable in relation to the valve body.

5. The check valve according to any one of the preceding claims, **characterized in that** said valve seat (26; 72) is provided on a valve seat disk (24; 68), which is inserted in a fluid channel of said check valve and is provided with at least one lead-through duct (28; 102).

6. The check valve according to claim 5, **characterized in that** said at least one lead-through duct (28; 102) is formed by means of a through bore and/or a groove in said valve seat disk (24; 68).

7. The check valve according to any one of the preceding claims, **characterized in that** said valve seat (72) is part of a streamlined body (70).

8. The check valve according to claim 7, **characterized in that** said shut-off member (74) is annular in shape and said streamlined body (70) extends through said shut-off member.

9. The check valve according to claim 7 or 8, **characterized in that** said streamlined body (70) tapers in the region of said valve seat (72) in the direction of flow and widens again downstream of said valve seat (72).

10. The check valve according to claim 9, **characterized in that** said streamlined body (70), adjacent to the region of enlargement (96) disposed downstream of said valve seat (72), tapers again down to an end tip (100).

11. A nozzle tube comprising filter means for plugging into a feed line and comprising a check valve according to any one of the preceding claims.

12. The nozzle tube according to claim 11, **characterized in that** a shroud tube (78) is provided within said corrugated tube (76) and said valve seat (72) is part of a streamlined body (70) and **in that** a jet straightener (88) is disposed in the shroud tube (78) downstream of said streamlined body (70).

13. The nozzle tube according to claim 12, **characterized in that** said jet straightener (34; 88) has a plurality of flow control surfaces (52; 102), which extend in the radial direction toward a longitudinal center axis (36; 80) of said jet straightener (34; 88), wherein a region directly surrounding said longitudinal center axis (36; 80) is free from fixtures.

14. The nozzle tube according to claim 12 or 13, **characterized in that** downstream said jet straightener (34; 88) a fluid channel (38) of constant cross-section is disposed.

## Revendications

1. Clapet anti-retour pour une buse de pulvérisation, comprenant un boîtier de clapet, un corps d'arrêt (30; 74) et un siège de clapet (26; 72), le corps d'arrêt (30; 74) étant disposé de manière déplaçable au moins dans une direction longitudinale du boîtier de clapet, le corps d'arrêt (30; 74) étant connecté au boîtier de clapet au moyen d'un tuyau ondulé (32; 76) disposé parallèlement à la direction longitudinale, le corps d'arrêt (30; 74) étant précontraint dans la direction du siège de clapet (26; 72) au moyen d'un effet de ressort du tuyau ondulé (32; 76), **caractérisé en ce que** le corps d'arrêt (30; 74), vu dans la direction du flux, est disposé au niveau d'une extrémité du tuyau ondulé (32; 76) située en amont.

2. Clapet anti-retour selon la revendication 1, **caractérisé en ce que** le tuyau ondulé (32; 76) est sollicité à la fois sur son côté intérieur situé radialement à l'intérieur et sur son côté extérieur situé radialement à l'extérieur au moins dans l'état ouvert du clapet anti-retour par du fluide à pulvériser sous pression.

3. Clapet anti-retour selon la revendication 1 ou 2, **caractérisé en ce qu'**à l'intérieur du tuyau ondulé (76) est prévu un tube de guidage (78), le tube de guidage (78) faisant partie d'un canal de fluide traversant le clapet anti-retour.

4. Clapet anti-retour selon la revendication 3, **caractérisé en ce que** le tube de guidage (78) est connecté fixement au corps d'arrêt (74) à une extrémité et est supporté de manière déplaçable par rapport au boîtier de clapet à l'autre extrémité.

5. Clapet anti-retour selon l'une quelconque des revendications précédentes, **caractérisé en ce que** le siège de clapet (26; 72) est prévu au niveau d'un disque de siège de clapet (24; 68) qui est inséré dans un canal fluidique du clapet anti-retour et qui est pourvu d'au moins un canal de passage (28; 102).

6. Clapet anti-retour selon la revendication 5, **caractérisé en ce que** l'au moins un canal de passage (28; 102) est réalisé au moyen d'un alésage de passage et/ou d'une rainure dans le disque de siège de clapet (24; 68).

7. Clapet anti-retour selon l'une quelconque des revendications précédentes, **caractérisé en ce que** le siège de clapet (72) fait partie d'un corps aérodynamique (70).

8. Clapet anti-retour selon la revendication 7, **caractérisé en ce que** le corps d'arrêt (74) est réalisé sous forme annulaire et le corps aérodynamique (70) s'étend à travers le corps d'arrêt.

9. Clapet anti-retour selon la revendication 7 ou 8, **caractérisé en ce que** le corps aérodynamique (70) se rétrécit dans la région du siège de clapet (72) dans la direction d'écoulement et s'élargit à nouveau en aval du siège de clapet (72).

10. Clapet anti-retour selon la revendication 9, **caractérisé en ce que** le corps aérodynamique (70), à la suite de l'élargissement (96) qui est disposé en aval du siège de clapet (72), se rétrécit à nouveau jusqu'à une pointe d'extrémité (100).

11. Tube de buse avec filtre destiné à être inséré dans une conduite d'alimentation comprenant un clapet anti-retour selon l'une quelconque des revendications précédentes.

12. Tube de buse selon la revendication 11, **caractérisé en ce qu'**à l'intérieur du tuyau ondulé (76) est prévu un tube de guidage (78) et le siège de clapet (72) fait partie d'un corps aérodynamique (70) et **en ce qu'**en aval du corps aérodynamique (70) dans le tube de guidage (78) est disposé un redresseur de jet (88).

13. Tube de buse selon la revendication 12, **caractérisé en ce que** le redresseur de jet (34; 88) présente plusieurs surfaces de guidage d'écoulement (52; 102) qui s'étendent dans la direction radiale jusqu'à un axe médian longitudinal (36; 80) du redresseur de jet (34; 88), une région entourant directement l'axe médian longitudinal (36; 80) étant exempte d'éléments encastrés.

14. Tube de buse selon la revendication 12 ou 13, **caractérisé en ce qu'**en aval du redresseur de jet (34; 88) est disposé un canal fluidique (38) de section transversale constante.
